# EUROPEAN PATENT APPLICATION

(11) **EP 2 335 972 A1**
(43) Date of publication of application: **22.06.2011**
(21) Application number: 10252106.9
(22) Date of filing: 13.12.2010
(51) Int. Cl.: B60N 2/60, B60N 2/58

(54) **Clip for holding a fastening elastic string**

(30) Priority: 16.12.2009 JP 2009285313
(71) Applicant: Daiwa Kasei Industry Co., Ltd., Okazaki-shi, Aichi 444-0004 (JP)
(72) Inventor: Ogino, Tetsuya, Okazaki-shi, Aichi 444-0004 (JP); Komeno, Jun, Okazaki-shi, Aichi 444-0004 (JP)
(74) Representative: Lamb, Martin John Carstairs

(57) **Abstract**

The purpose of this invention is to easily conduct operation to fix a fastening elastic string in order to attach a seat back cover to a seat back main body.

The means to achieve the purpose is to form a clip (201) comprising a holding part (7) provided with a groove (9) to hold a fastening elastic string (104) and a locking part (8) provided with first and second locking bodies (15, 16) in order to be locked to a fixing hole (5) of a lower panel (103), then to insert the fastening elastic string (104) to the groove (9) of the clip (201) while pulling thereof, and then to set a protrusion (3) of the fastening elastic string (104) to stopper (11b) of the groove (9) with elasticity in the shrinking direction.

## Description

### RELATED APPLICATIONS

This application claims the priority of Japanese Patent Application No. 2009-285313 filed on December 16, 2009. The disclosure of the prior application is hereby incorporated herein in the entirety by reference.

### BACKGROUND OF THE INVENTION

### [Field of the Invention]

This invention relates to a clip for holding a fastening elastic string, when attaching a seat back cover to a seat back main body.

### [Description of the Related Art]

For a vehicle (such as a car), a bucket shaped seat is used in order to have good holding capacity of a seated person's body. This seat comprises a seat back main body and a seat back cover which is attached to the seat back main body. Also, the seat back cover is attached to the seat back main body under tension by an elastic string (fastening elastic string) provided on a back surface thereof (for example, referred to Patent Document 1). The fastening elastic string is tied to the seat back main body with a ring shaped fixture called a "hog ring" (referred to Patent Document 2).

However, the operation of tying a fastening elastic string to a hog ring is complicated and it is a reason of preventing work efficiency improvement.

### [Related Art Document]

### [Patent Document]

[Patent Document 1] Japanese Laid-Open Patent Publication No. H7-59962
[Patent Document 2] Japanese Laid-Open Patent Publication No. 2003-275067

### SUMMARY OF THE INVENTION

Considering the above situations, the purpose of this invention is to conduct operation of tying a fastening elastic string used to attach a seat back cover to a seat back main body.

In order to achieve the above purpose, this invention is,
a clip made of plastic for holding a fastening elastic string, when attaching a seat back cover to a seat back main body of a vehicle with the fastening elastic string, in order to be used to hold the fastening elastic string to said seat back main body in a state that elastic tension occurs to the seat back main body,
comprising;
a locking part to be locked to a fixture formed on said seat back main body; and
a holding part including;
   a groove formed integrally with the locking part, and in order to hold a protrusion formed protrudingly on a part of said fastening elastic string so as to protrude in a thickness direction thereof, to insert the fastening elastic string in a state of being under elastic tension thereof; and
   stopper formed on a part of said groove to set said protrusion by elasticity in a shrinking direction of the fastening elastic string in a state of tension to said fastening elastic string being relaxed.

When attaching the fastening elastic string to the clip of this invention, the elastic string is inserted to the groove of the clip while pulling the fastening elastic string in a longitudinal direction, and then the protrusion of the fastening elastic string is set on the stopper by relaxing the tension while maintaining that state. This allows the fastening elastic string to be attached to the clip in a retained state. All an operator needs to do is to pull the fastening elastic string in a longitudinal direction, to insert the elastic string to the groove of the clip, and then to relax that tension, and thus this attaching operation is extremely easy. Also, the protrusion of the fastening elastic string is set at the stopper of the groove of the clip with elasticity, so that displacement by vibration or secular change less likely occurs.

At least one end of said groove, it is desirable to form tapered inner surfaces, being distanced increasingly to an extending direction of the groove, to receive the protrusion of said fastening elastic string. This tapered inner surfaces act as guide or stopper for the protrusion of the fastening elastic string.

Said stopper are positioned at back portion of said tapered inner surfaces of the groove, so that the protrusion of said fastening elastic string can be guided by said tapered inner surfaces and then set at said stopper.

The stopper of said holding part set said protrusion formed on a middle portion of said fastening elastic string leaving a surplus length portion to end thereof,
and said holding part is provided with constraining section to constrain the surplus length portion in a state that the protrusion is set at the stopper, as a portion being held by an operator for pulling operation of the fastening elastic string.

The fastening elastic string is provided with the surplus length portion, and the operator can hold this surplus length portion to pull the fastening elastic string, and thus this operation is easy. Also, the surplus length portion of the fastening elastic string attached to the clip is constrained by the constraining section. This prevents the surplus length portion of the fastening elastic string from trailing down and being seen by a seated person of the vehicle, so as to achieve good appearance.

Said locking part comprises at least one pair of elastically deformable clicks to be inserted to a fixing hole as the fixture formed on said seat back main body, and
these clicks are touched to opening edges of said fixing hole so as to go through the opening edges while being elastically deformed to narrow distance therebetween, and then elastically restored as widening the distance, so as that these clicks are locked at the edges of the fixing hole.

### BRIEF DESCRIPTION OF THE DRAWINGS

Fig.1 is a schematic view of a seat 100 for a vehicle.
Fig.2 is a plan view of a fastening elastic string 104.
Fig.3 is an elevation view of a lower panel 103.
Fig.4 is a perspective view of a clip 201 of the first embodiment.
Fig.5 is a sectional elevation view of the same.
Fig.6 is a plan view of the same.
Fig.7 is a side view of the same.
Fig.8 is a bottom view of the same.
Fig. 9A is an illustration for function of clicks 19 when fixing a clip 201 to a fixing hole 5.
Fig.9B is an illustration for function of the same.
Fig.9C is an illustration for function of the same.
Fig.10 is an illustration for function in a state of inserting a fastening elastic string 104 to a groove 9 of a clip 201.
Fig.11 is a plan view in a state of Fig.10.
Fig. 12 is a plan view in a state that a fastening elastic string 104 is fixed to a clip 201.
Fig. 13 is a perspective view of a clip 202 of the second embodiment.
Fig.14 is a view showing the modified example 1.
Fig.15 is a view showing the modified example 2.
Fig.16 is a view showing the modified example 3.
Fig.17 is a view showing the modified example 4.
Fig.18 is a view showing the modified example 5.
Fig.19 is a view showing the modified example 6.
Fig.20 is a view showing the modified example 7.

### MODES FOR CARRYING OUT THE INVENTION

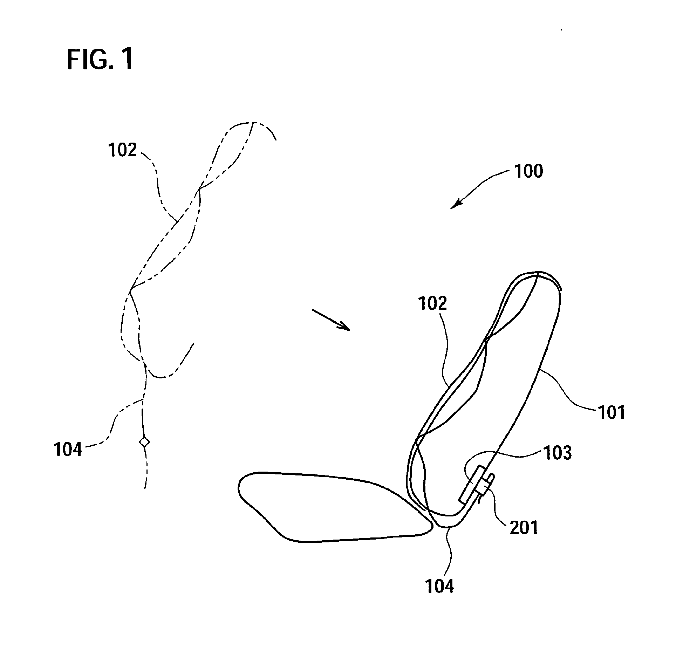

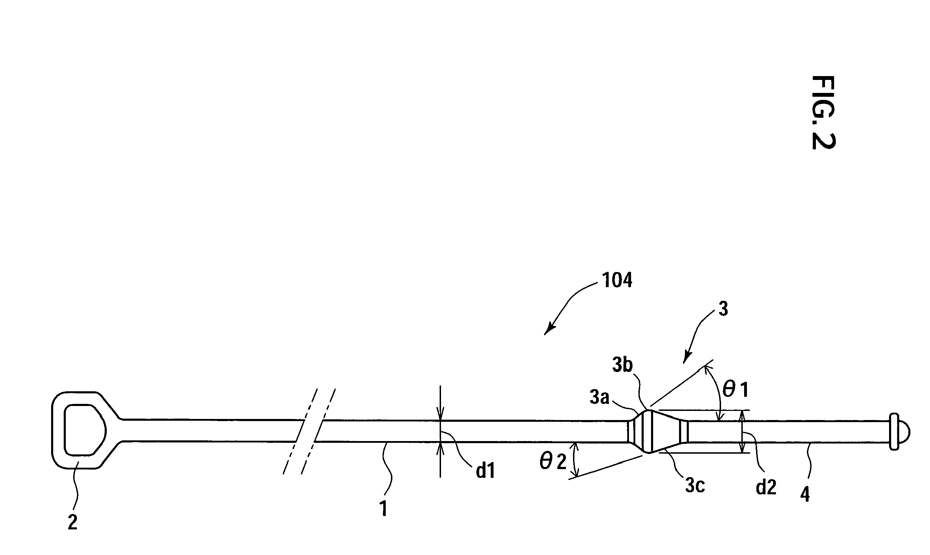

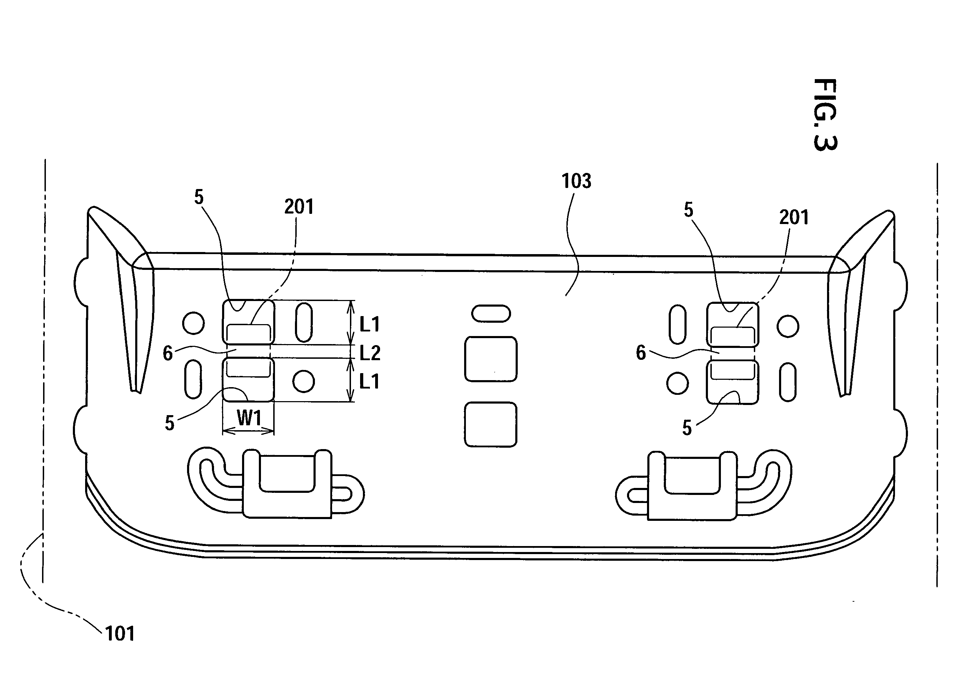

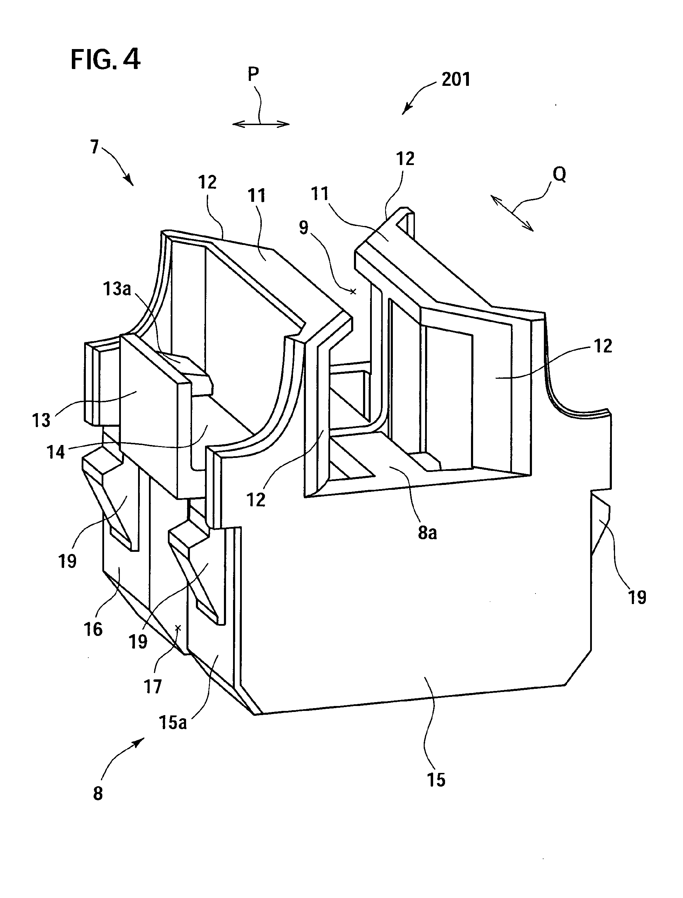

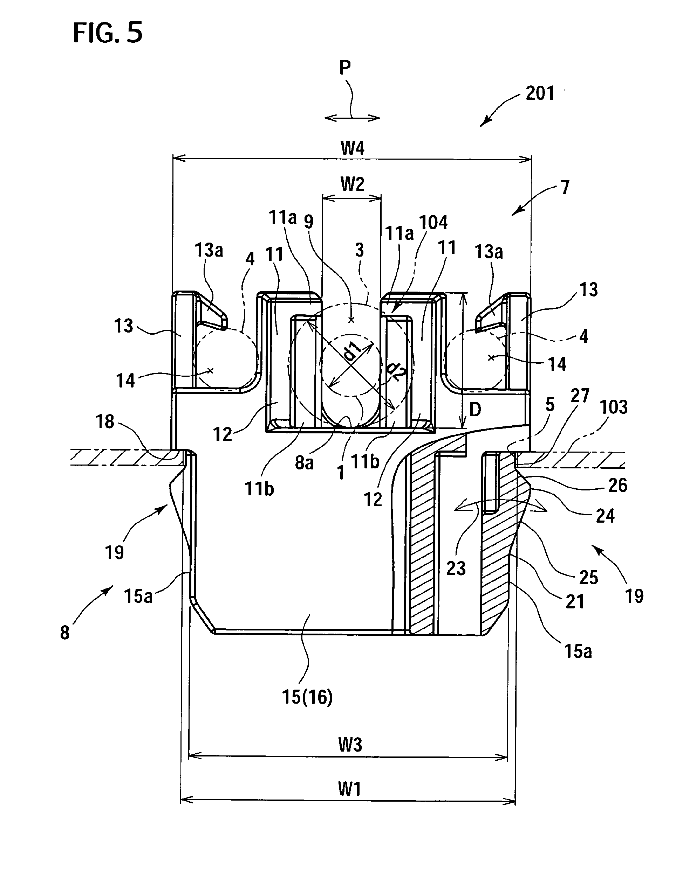

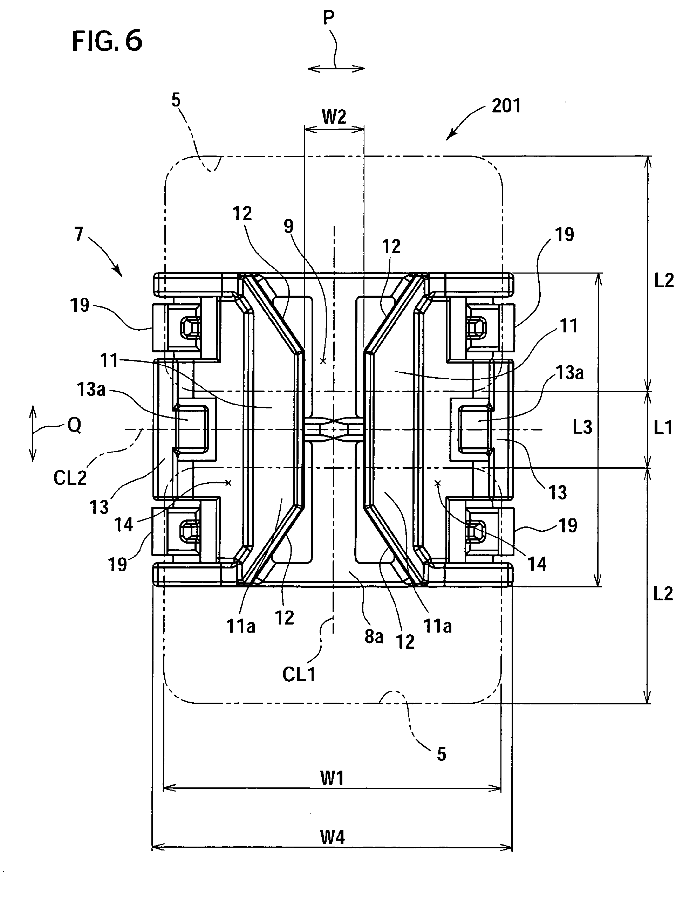

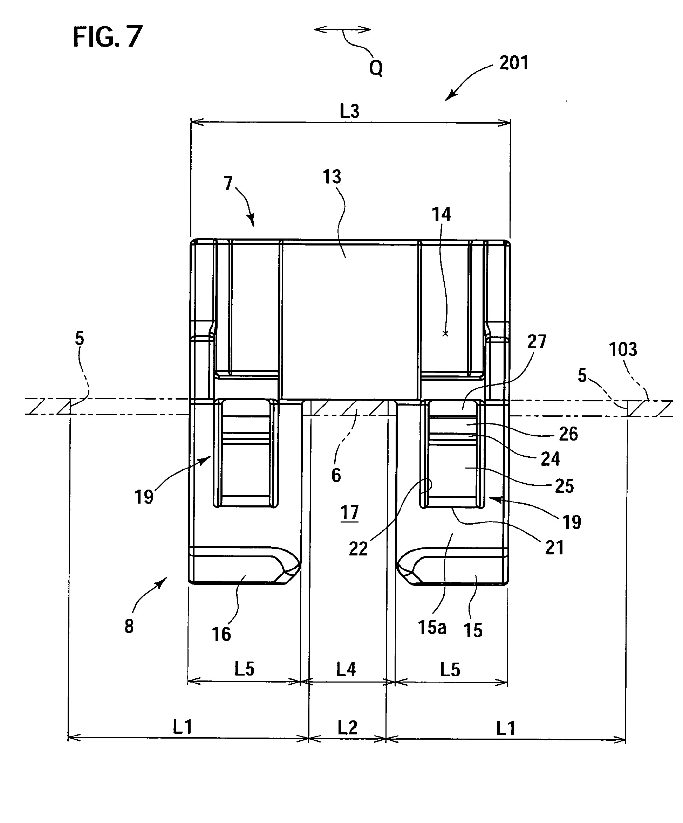

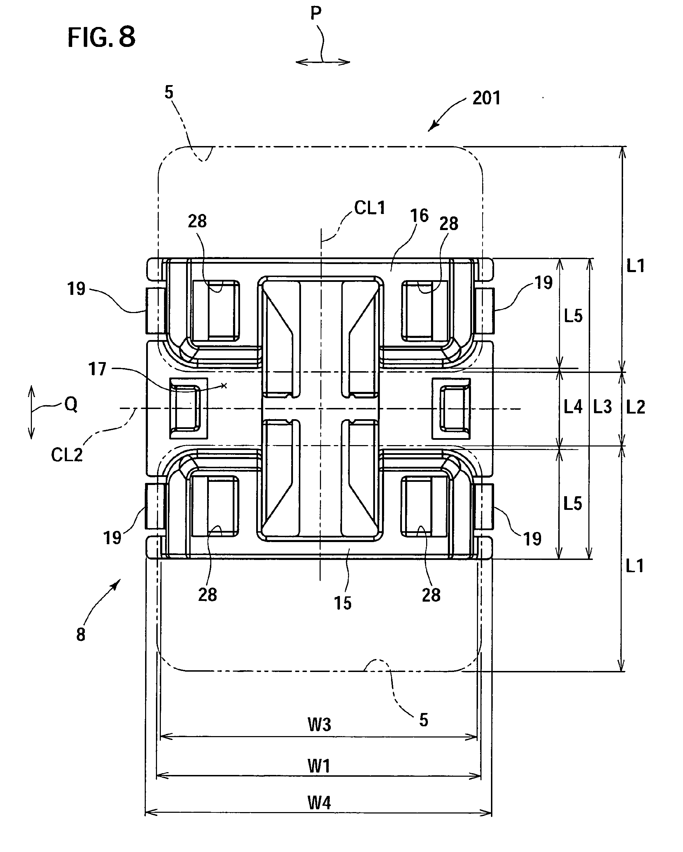

Hereinafter, embodiments of this invention will be explained in details. Fig.1 is a schematic view of a seat 100 for a vehicle. Fig. 2 is a plan view of a fastening elastic string 104. Fig.3 is an elevation view of a lower panel 103. Fig.4 is a perspective view of a clip 201 of the first embodiment . Fig. 5 is a sectional elevation view of the same. Fig.6 is a plain view of the same. Fig. 7 is a side view of the same. Fig.8 is a bottom view of the same.

### [Embodiment 1]

Firstly, configuration of a seat 100 will be explained briefly. As shown in Fig. 1, the seat 100 comprises a seat back main body 101 mainly made of plastic and a seat back cover 102 to be attached to the seat back main body 101. A lower panel 103 is attached at a lower back area of the seat back main body 101. The seat back cover 102 is held under tension applied by a clip for holding a fastening elastic string 201 (described simply as "clip 201" hereinafter) fixed to the lower panel 103, so as to be attached to the seat back main body 101.

The fastening elastic string 104 will be explained. As shown in Fig. 2, the fastening elastic string 104 is extendable in a longitudinal direction, having a circular section. A hook 2, which is ring-shaped and can be hooked to the seat back cover 102, is formed at one end portion of the elastic main body 1 of the fastening elastic string 104, and a protrusion 3, having a bigger diameter d2 than an outer diameter d1 of the elastic main body 1 (d2>d1), is provided near the other end (which is a side to be fixed to the clip 102) . Also, ahead of the protrusion 3, a grip 4, which allows an operator to pull the fastening elastic string 104 easily in a longitudinal direction, is provided extendedly from the protrusion 3. An outer diameter of the grip 4 is the same as the outer diameter d1 of the elastic main body 1, and the maximum outer diameter d2 of the protrusion 3 is approximately twice larger than the outer diameter d1 of the elastic main body 1. The protrusion 3 of this embodiment has a combined shape of a first tapered outer circumferential surface 3a, which is conically trapezoidal shaped and provided extendedly so as to have a predetermined inclined angle θ1 from the elastic main body 1 and its outer diameter d1 to increase continuously, a maximum outer diameter portion 3b provided continuously from the first tapered outer circumferential surface 3a, and a second tapered outer circumferential surface 3c, which is conically trapezoidal shaped and provided extendedly so as to have a predetermined inclined angle θ2 from the maximum outer diameter portion 3b to the grip 4 and its outer diameter d1 to decrease continuously.

As shown in Fig.3, two fixing holes 5, which respectively have predetermine distances vertically, are provided respectively near both ends in a width direction of the lower panel 103. The clips 201 of the embodiment of this invention are fixed to these fixing holes 5 (it will be explained later). The fixing holes 5 have the same size and placement, and thus the fixing holes 5 on one side (the left side from the view of the Fig.3) will be explained in the descriptions. Also, the fixing holes 5 provided on the lower panel 103 are initially for placing hog rings. Further, each hole provided around the fixing holes 5 is for lacing wire harnesses.

Each fixing hole 5 is rectangular shaped, and the two fixing holes 5 are provided vertically in parallel on the lower panel 103, having a predetermined distance. Herewith, a bridge 6 is formed between the two fixing holes 5. It will describe an inner width of the fixing hole 5 as W1, an inner height of the fixing hole 5 as L1 and a height of the bridge 6 as L2 hereinafter.

Next, the clip 201 of the first embodiment of this invention will be explained, referring to Figs.4 to Fig.8. The clip 201 is formed by injection molding of thermoplastic resin (e.g. polyacetal) . A holding part 7 is formed to insert and hold the elastic main body 1 of the fastening elastic string 104 on an upper portion of the clip 201, and similarly a locking part 8 is formed to be inserted and locked to the fixing hole 5 of the lower panel 103 on a lower portion of the clip 201. Here, it describes a horizontal direction on the view of Fig.5 as "width direction P", an intersecting direction with the width direction P on a horizontal plane (orthogonal direction in this embodiment's case) as "depth direction Q" shown in Fig.7.

As shown in Fig. 5, a groove 9 is formed, having a predetermined width W2, on the holding part 7 from its upper end surface down ( to the side of the locking part 8 provided) to an above surface 8a of the locking part 8. The above surface 8a of the locking part 8 is the same as a bottom surface of the groove 9. On the holding part 7, a pair of walls 11 is vertically arranged in the width direction P, being opposed to each other. A width W2 of the groove 9 is approximately the same as the outer diameter d1 of the elastic main body 1 of the fastening elastic string 104 (it will be smaller than the outer diameter d1 of the elastic main body 1, when the fastening elastic string 104 is pulled), and a depth D of the groove 9 is slightly greater than the maximum outer diameter d2 of the protrusion 3 of the fastening elastic string 104. As shown in Fig. 6, at both end portions in the depth direction Q of the pair of the walls 11, tapered inner surfaces 12 are formed symmetrically to a midpoint in a longitudinal direction of the groove 9, being distanced increasingly in an extending direction of the groove 9. These tapered inner surfaces 12 are guides to help the fastening elastic string 104 to enter the groove 9. The upper end portions of the respective walls 11, which form the groove 9 and opposing to each other, project inwardly to each other, so as to form projecting portions 11a to cover space of the groove 9 partly from above. Further, at back portions in a groove direction of the tapered inner surfaces 12, a pair of stoppers 11b to contact directly and set the protrusion 3 of the fastening elastic string 104 is formed to be right to the groove direction and also to project inwardly. The protrusion 3 of the fastening elastic string 104 is inserted to the groove 9 as going underneath the projecting portions 11a, and then the protrusion 3 touches the stoppers 11b so as to be held. The distance between the stoppers 11b is the same as the width W2 of the groove 9, and approximately the same as the outer diameter d1 of the elastic main body 1 of the fastening elastic string 104.

As shown in Figs.6 and 4, at outer sides (back regions) and approximately central portions in the depth direction Q of the paired walls 11, constraining sections 13 are vertically arranged respectively. These constraining sections 13 are arranged in a state of being standing from the above surface 8a of the locking part 8. Herewith, an upper space 14 having a predetermined width is formed between the paired walls 11 and the respective constraining sections 13. Also, end portions (upper end portions) of the respective constraining sections are bended obliquely downward to the groove 9 side, so as to form hedges 13a at these bended portions. As explained later, when the fastening elastic string 104 is attached to the clip 201, the grip 4, which is a surplus portion of the fastening elastic string 104, is placed at the upper space 14 and held by the hedges 13a. This prevents the grip 4 of the fastening elastic string 104 fixed by the clip 201 from trailing down.

Next, the locking part 8 of the clip 201 will be explained. As shown in Figs.4, 7 and 8, the locking part 8 of the clip 201 of this embodiment is divided into two, and comprises first and second locking main bodies 15, 16. As shown in Figs. 6 and 8, the respective locking main bodies 15, 16 are arranged opposedly, so as to be bilaterally symmetrical with a first center line CL1 which divides the width W2 of the groove 9 of the holding part 7 into two, and also to be anteroposteriorly symmetrical with a second center line CL2 (a theoretical center line along the width direction P) which divides a depth length L3 of the clip 201 into two. As shown in Fig.7, a lower space 17, being groove shaped, is formed between the first locking main body 15 and the second locking main body 16, and a distance thereof L4 is slightly greater than the height L2 of the bridge 6 of the lower panel 103 shown in Fig. 3. Here, configurations of the first locking main body 15 and the second locking main body 16 are the same except being symmetrical, and thus the descriptions only explains the first locking main body 15.

As shown in Figs. 4 and 7, the first locking main body 15 is provided extendedly on the lower side of the holding part 7, having an end surface (front surface) thereof in the depth direction Q as the same as the end surface of the holding part 7. As shown in Fig.5, width W3 of the first locking main body 15 is slightly smaller than width W4 of the holding part 7 (W3<W4), and a stepped surface 18 is formed between the holding part 7 and the locking main body 15.

As shown in Fig.5, respective clicks 19 are formed on upper portions of the both ends (side surface walls 15a) in the width direction P of the first locking main body 15. The click 19 is formed by being cut off with a U-shaped cut-off groove 22 shown in Fig.7 except a lower end (base end section 21) of the click 19 on the side surface wall 15a of the first locking main body 15. This allows the click 19 to turn freely (elastically deformable) to the arrow 23 direction (shown in Fig.5) with the connected section (base end section) to the side surface wall 15a as a supporting point. The click 19 is triangle shaped in section, and its apex 24 projects from the side surface wall 15a of the first locking main body 15 to outer surfaces of the pair of the constraining sections. Also, the click 19 is formed with a lower inclined surface 25 reaching to the base end section 21 in a region lower than the apex 24, and similarly an upper inclined surface 26 and a perpendicular surface 27 in a upper region. Regarding the click 19, a inclined angle of the lower inclined surface 25 to the height direction (perpendicular direction) is shallower than a inclined angle of the upper inclined surface 26.

As shown in Figs.7 and 8, the clip 201 is attached by inserting the first and second locking main bodies 15, 16 of the locking part 8 to the two fixing holes 5 of the lower panel 103 shown in Fig.3. Here, the first and second locking main bodies 15, 16 of the clip 201 are inserted to the fixing holes 5 over the bridge 6 of the lower panel 103. Because of this, the width W3 of the first locking main body 15 of the clip 201 is slightly smaller than the inner width W1 of the fixing holes 5 of the lower panel 103, and the width W4 of the holding part 7 of the clip 201 is slightly greater than the inner width W1 of the fixing hole 5 (W3<W1<W4) . This allows the respective locking main bodies 15, 16 of the clip 201 to be inserted to the fixing holes 5, and also, as shown in Fig. 5, when the click 19 is elastically deformed and then pass the fixing hole, the stepped surface 18 of the holding part 7 and the locking part 8 (that are the first and second locking part 15, 16) of the clip 201 touches a surface of the lower panel 103, so as to disable the clip 201 to be inserted further. Also, the first and second locking main bodies 15, 16 of the clip 201 reaches over the bridges 6 (holds the bridges 6 bilaterally), and thus the clip is not misaligned vertically of the fixing holes. As a result, the clip 201 is attached to the fixing holes 5 of the lower panel 103. That is to say, the position of the first and second locking main bodies 15, 16 in a direction of connecting two holes 5 are restricted by the bridges 6. Also, references 28 on Fig.8 are removed holes provided on the respective locking main bodies 15, 16 for weight-saving of the clip 201.

Function of the clip 201 of this embodiment will be explained. As shown in Fig.1, the ring-shaped hook 2 on Fig. 2 of the fastening elastic string 104 is hooked preliminarily on a back portion of the seat back cover 102. When attaching the seat back cover 102 to the seat back main body 101, an operator mounts the elastic main body 1 of the fastening elastic string 104 on an attaching groove (not shown) of the seat back main body 101, and deliver the other end (the end of the side provided with the protrusion 3) of the fastening elastic string 104 underneath the bottom side of the seat back main body 101 so as to be pulled out to the back side.

The lower panel 103 is attached at a lower end on the back side of the seat back main body 101. The clip 201 is fixed to the two fixing holes 5 provided on this lower panel 103. When doing so, the first and second locking main bodies 15, 16 provided on the locking part 8 of the clip 201are inserted to the two fixing holes 5 over the bridge 6. As shown in Figs. 7 and 8, regarding the locking part 8 of the clip 201, the distance L4 of the lower space 17 is slightly greater than the height L2 on Fig. 3 of the bridge 6 of the lower panel 103, and thus the first and second locking main bodies 15, 16 can be inserted to the fixing holes 5 over the bridge 6. Also, the height L1 on Fig.3 of the respective fixing holes 5 is greater than thickness L5 on Fig.7, 8 of the respective locking main bodies 15, 16 of the clip 201, so that it would not cause any troubles to inserting the respective locking main bodies 15, 16 to the two fixing holes 5.

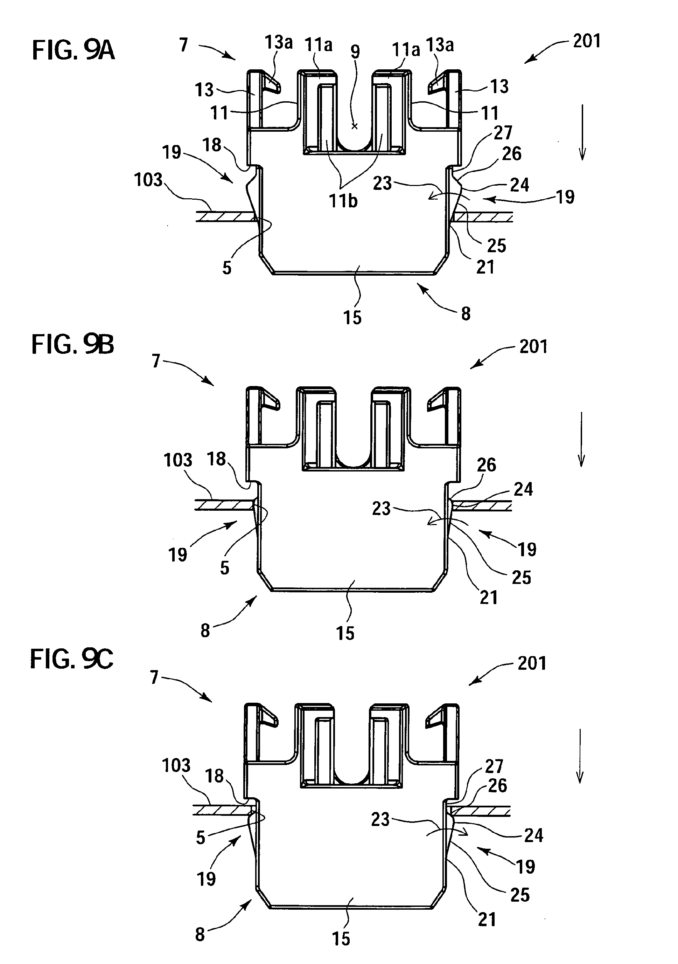

Function of the click 19 then will be explained, referring to Figs . 9A to 9C. As shown in Fig. 9A, when the first and second locking main bodies 15, 16 of the clip 201 are inserted to the fixing holes 5, the lower inclined surfaces 25 of these clicks 19 touches the inner wall surfaces of the fixing holes 5. When inserting the clip 201 further in this state, as shown in Fig.9B, the clicks turns to an inward direction shown with the arrow 23 (a direction which makes distance between these apexes 24 shorter), having their base end sections 21 as supporting points so as to be elastically deformed. This allows the locking part 8 of the clip to be inserted to the fixing holes 5. The inclined angle of the lower inclined surface 25 of the click 9 is shallow, and thus the operator can easily insert the clip 201 to the fixing holes 5.

When the apex 24 of the click 19 passes the inner wall of the fixing hole 5, as shown in Fig.9C, the click 19 turns to an opposite direction (outer direction shown with the arrow 23) so as to be elastically restored, the respective locking main bodies 15, 16 of the clip 201 being inserted while the upper inclined surface 26 of the click 26 being touched the inner wall of the fixing hole. This makes the distance between the apexes 24 of the clicks 19 wider. This distance is greater than the inner width W1 of the fixing hole 5 shown in Fig.5, and thus the locking part 8 of the clip 201 has been inserted to the fixing holes cannot be pulled out. The inclined angle of the upper inclined surface 26 is steeper than the inclined angle of the lower inclined surface 25, and thus the clip 201 is rapidly restored elastically. Then, the clip 201 makes the perpendicular surfaces 27 of the clicks 19 to be placed opposedly to the fixing holes, and also the stepped surface 18 of the holding part 7 to touch the surface of the lower panel 103, and then stops. In this state, the holding part 7 of the clip 201 projects from the surface of the lower panel 103. Also, the clicks 19 of the respective locking main bodies 15, 16 of the clip 201 are locked to the fixing holes 5, so that the clip 201 cannot be pulled out. Especially, the inclined angle of the upper inclined surface 26 is steep, so as to prevent the clicks 19 from being pulled out even further.

Here, as shown in Fig.8, regarding the locking part 8 of the clip 201, the thicknesses L5 of the first and second locking main bodies are the same, and also these are arranged symmetrical to the second center line CL2 of the clip 201. Because of this, when the respective locking main bodies 15, 16 of the clip 201 are inserted to the fixing holes 5 of the lower panel 103, they can be inserted whichever the side up. Also, as shown in Fig.6, regarding the holding part 7 of the clip 201, the groove 9 is arranged symmetrical to the first center line CL1. Because of this, regardless being attached whichever the side up, the position of the groove 9 is always constant. That means, the operator does not have to pay attention to the up or down direction when attaching the clip 201. Further, the respective locking main bodies 15, 16 of the clip 201 are fixed over the bridges 6 of the fixing holes. Because of this, when trying to attach the clip mistakenly crisscross, the respective locking main bodies 15, 16 of the clips 201 and the bridges 6 interfere, so as to unable to attach it. As a result, improper attachment would not occur.

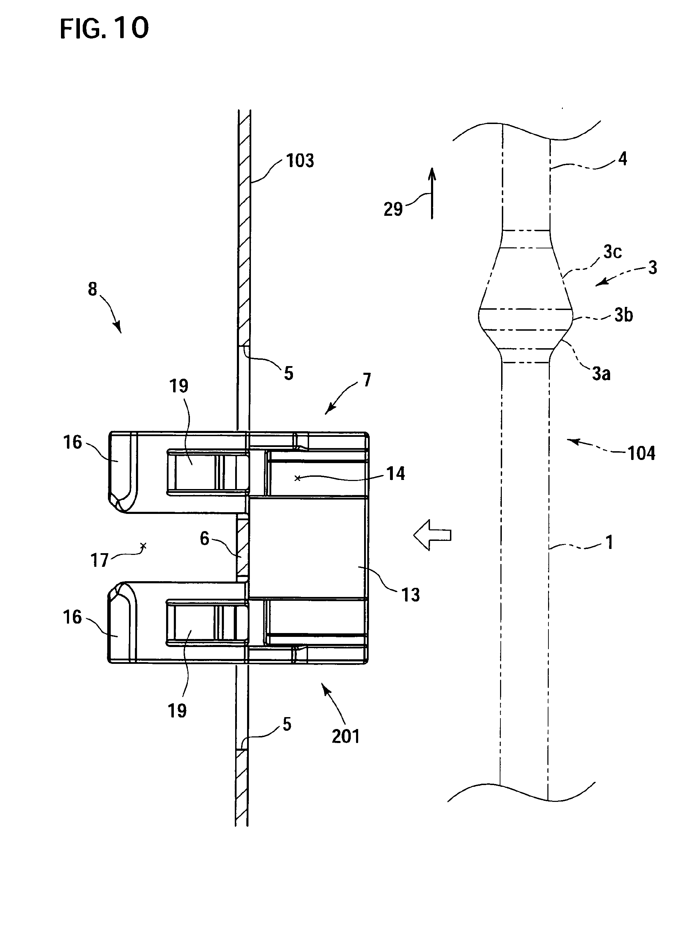

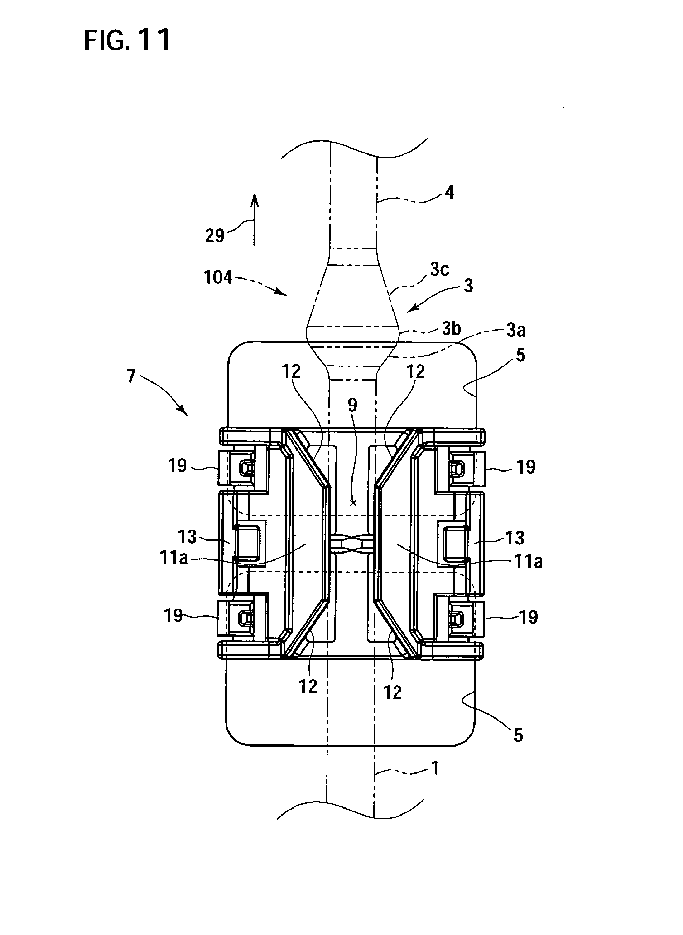

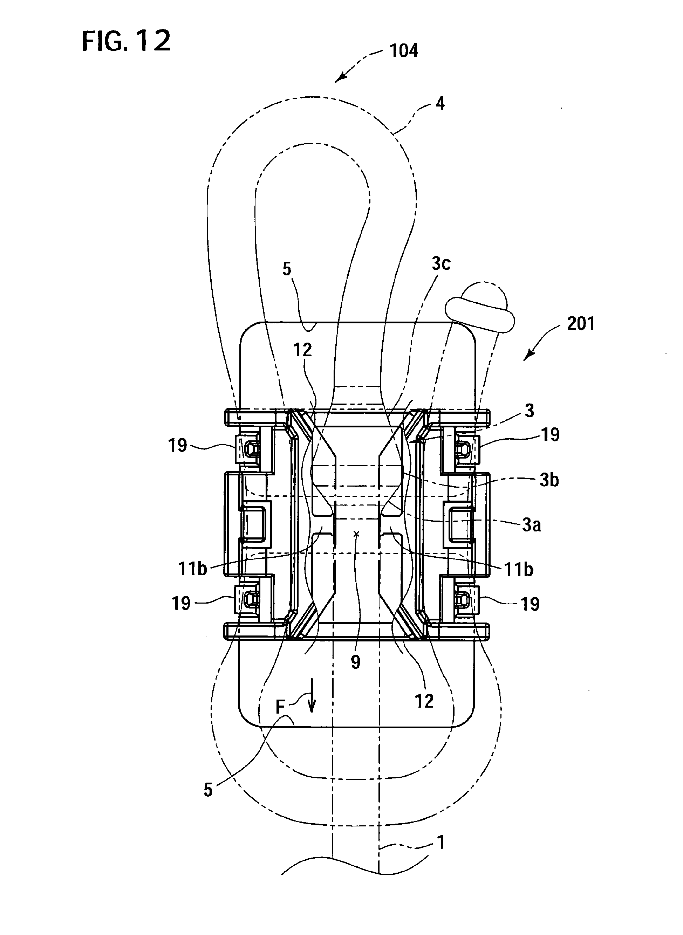

Next, as shown in Figs. 10 and 11, by pulling up the grip 4 of the fastening elastic string 104, which goes under the bottom of the seat back main body 101 and then pulled out, in a longitudinal direction (the arrow 29 direction), the protrusion 3 is disposed above the holding part 7 of the clip 201. As the fastening elastic string 104 is being pulled, the seat back cover 102 clings closely to the seat back main body 101 (referred to Fig.1) . Then, the elastic main body 1 of the fastening elastic string 104 is inserted to the groove 9 of the holding part 7 of the clip 201. The tapered inner surfaces 12 on lower sides on Fig.11 are guides to lead the fastening elastic string 104. When weakening tension applied to the fastening elastic string 104 in a state of the fastening elastic string 104 being inserted to the groove 9, as the protrusion 3 of the fastening elastic string 104 is being led to the upper side of the tapered inner surfaces 12 on Fig. 11, so as to be inserted into the groove 9 as shown in Fig.12, and then the protrusion 3 touches the stoppers 11b shown on Fig. 5, so as to be set. When doing so, because of the fastening elastic string 104 being pulled elastically, the protrusion 3 is pushed to the stoppers 11b by the elasticity in the shrinking direction, so as to be settled. More specifically, the protrusion 3 stops in a stated of the tapered outer circumferential surface 3a shown in Fig.2 being pushed into a gap between the stoppers 11b. Also, the maximum outer diameter 3b of the protrusion 3 is underneath the projecting portions 11a shown in Fig.5, so that there is no possibility that the fastening elastic string 104 would be pulled out upwardly in a view of Fig.5.

Then, as shown in Fig.12, in a state that the elastic main body 1 of the fastening elastic string 104 is held by the holding part 7 of the clip 201, the grip 4, which is the surplus portion, is disposed at the space 14 (shown in Fig. 5) between the walls 11 and the constraining sections .13, and held by the hedges 13a the constraining sections 13.

Tension force F shown in Fig. 12 of the fastening elastic string 104 acts on the clip 201 attached to two fixing holes 5 provided on the lower panel 3, as shown in Fig. 7, the bridges 6 of the lower panel 103 are disposed at the lower space 17 between the respective locking main bodies 15, 16, and the bridges 6 exercise a stopper function, and the bridges 6 receive the tension force F of the fastening elastic string 104 acting on the clip 201.

### [Embodiment 2]

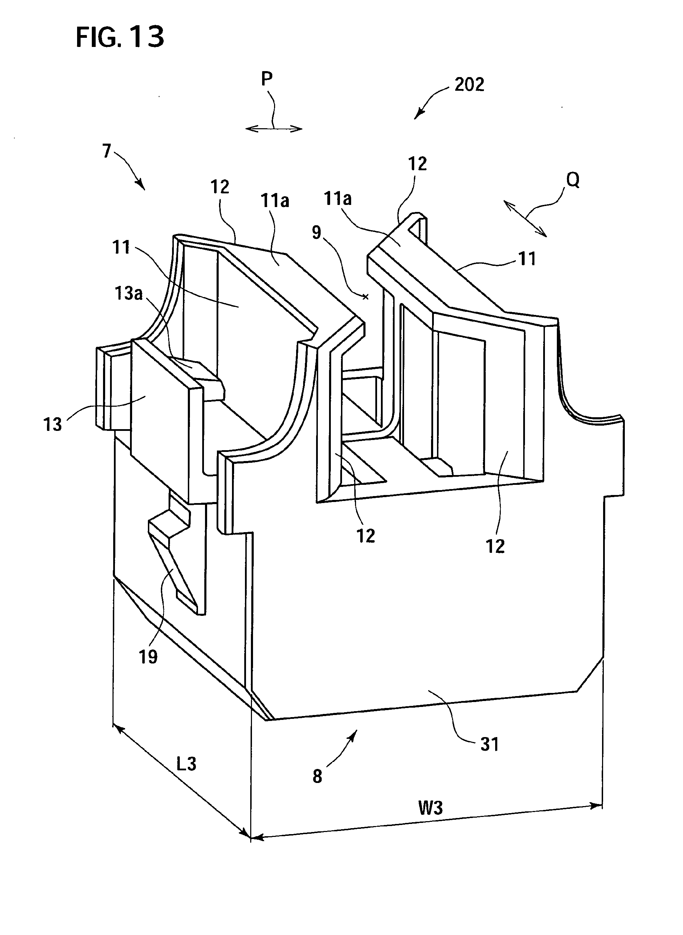

The clip 201 of this embodiment is provided with two locking main bodies 15, 16 on the locking part 8, in order to be attached with use of two fixing holes 5 provided on the existing lower panel 103.However supposing a case of having one fixing hole 5, or a case of fixing the clip 201 to any one of the two fixing hole 5, as shown in Fig.13, a locking main body 31 may be formed on the locking part 8. Regarding a clip 202 of the embodiment (the second embodiment) of Fig. 13, the length L3 of the locking part 8 of the clip 202 is set according to the height L1 of the fixing hole 5 shown in Fig. 7 (so as to be slightly shorter than the height L1 of the fixing hole 5) . In a case of this clip 202, it is desirable to have the locking part 8 to be rectangular shaped in a planer view, having the length L3 and the width W3 of the locking part 8 (locking main body 31) different, so as to prevent the operator from mistaking crisscross during attachment. Also, regarding other parts, it is the same as the clip 201 of the first embodiment shown in Figs.4 to 8, thus the explanations will be diverted with the same parts referred to the same references, and the explanation in details will be omitted.

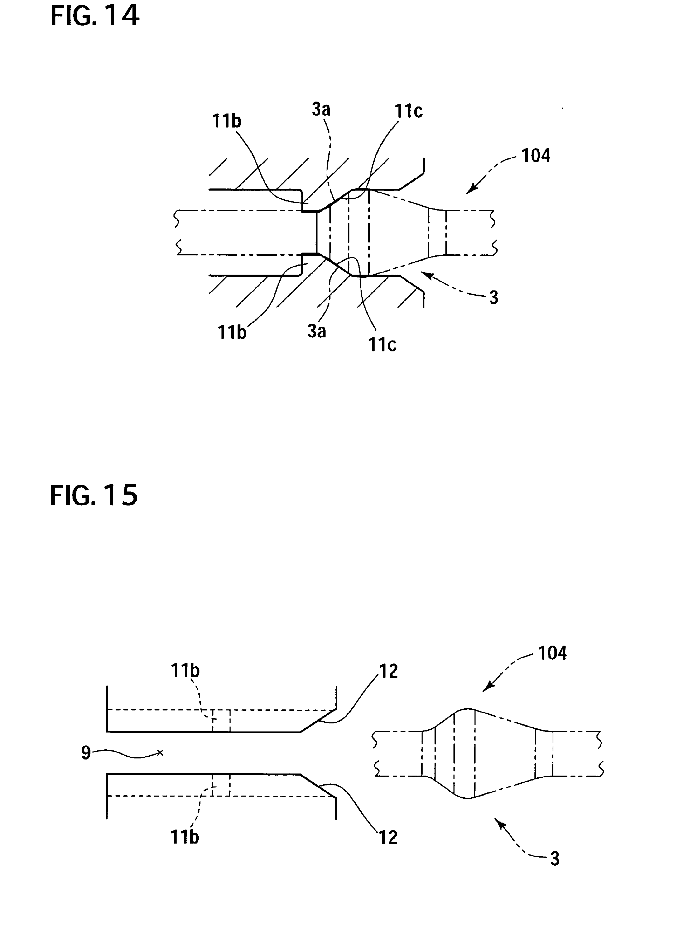

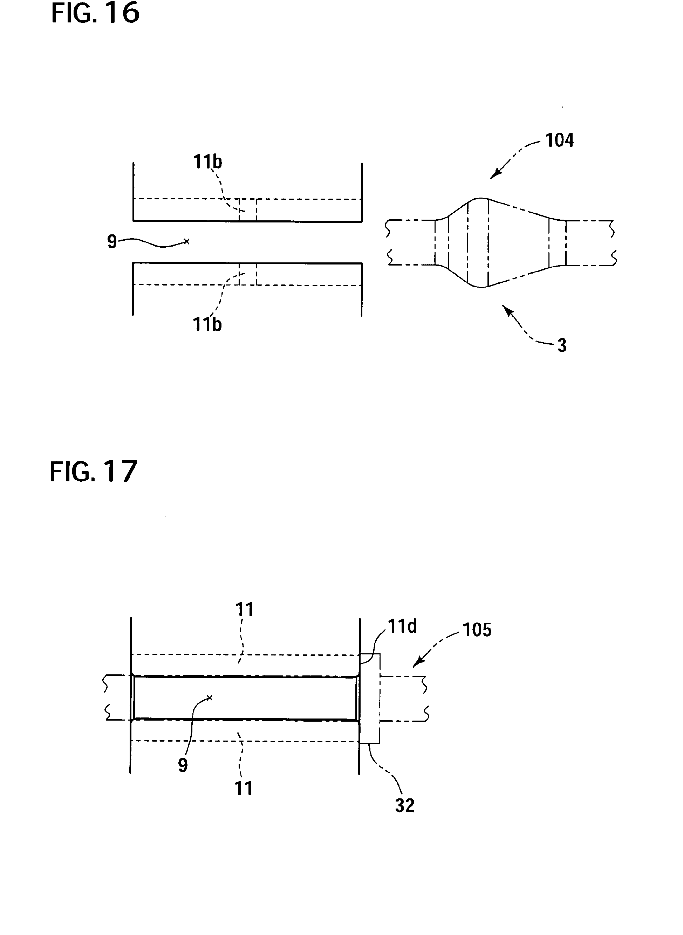

Also, the above is only one embodiment, and this invention can be modified variously without departing from its spirit. Figs.14 to 20 show another embodiment. Fig.14 shows an example that the stopper 11b has a conically trapezoidal shaped inner surface 11c corresponding to the first tapered circumferential surface 3a of the protrusion 3 of a fastening elastic string 104, Fig. 15 shows an example that a tapered inner surface 12 is formed only on side of the groove 9 (the side having the protrusion to be inserted), Fig. 16 is an example that there is no tapered inner surface 12 at both ends of the groove 9, and Fig.17 is an example that a protrusion 32 (e.g. a mere large diameter portion, not being tapered) of a fastening elastic string 105 is set at one side surface of the groove 9 as a stopper 11d.

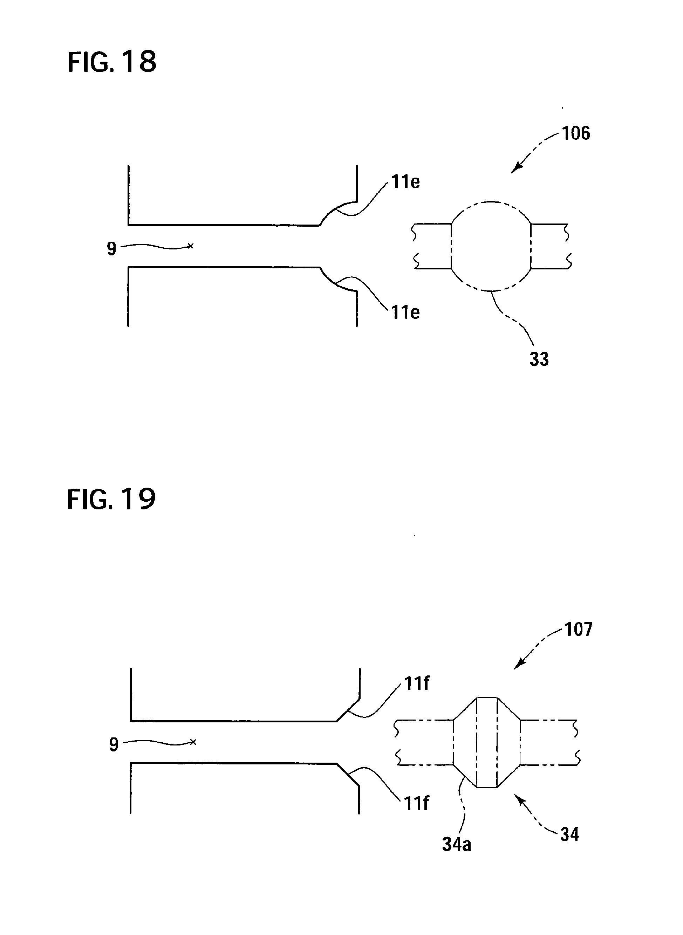

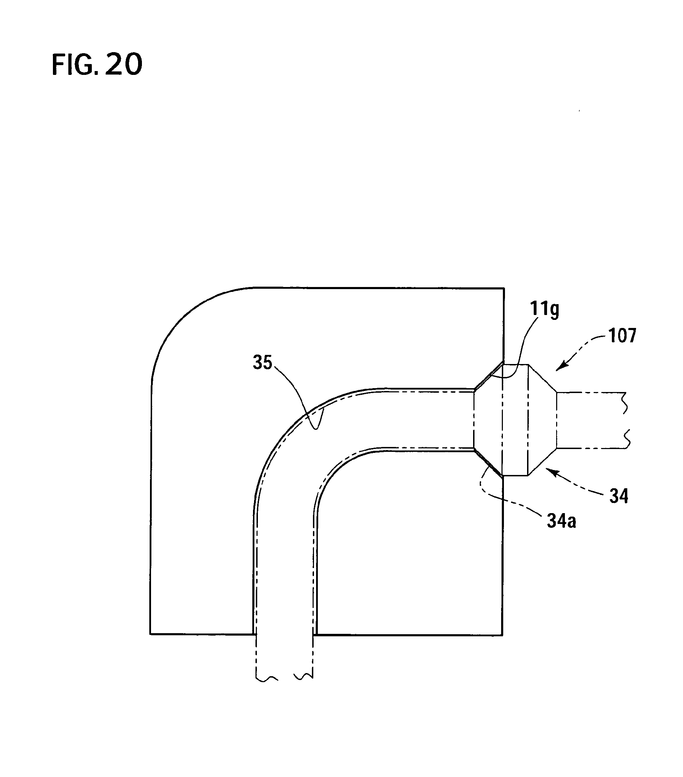

Fig.18 shows an example that a spherical concave surface fitted to a protrusion 33 (spherical in this case) of a fastening elastic string 106 is formed on one end surface of the groove 9, and as a stopper 11e the protrusion 33 is set thereon, and Fig.19 is an example that if a protrusion 34 a fastening elastic string 107 has a conically trapezoidal tapered circumferential surface 34a, a stopper 11f corresponding the tapered circumferential surface 34a is formed on one side surface of the groove 9, and Fig.20 is an example that a groove 35 is refractive nonlinear instead of linear , and a fastening elastic string 107 is inserted thereto, and a protrusion 34 thereof is set at a stopper11g provided on a end portion or center portion of the groove 35.

## Claims

1. A clip made of plastic for holding a fastening elastic string (104, 105, 106, 107),
when attaching a seat back cover (102) to a seat back main body (101) of a vehicle with the fastening elastic string (104, 105, 106, 107) in order to be used to hold the fastening elastic string (104, 105, 106, 107) to said seat back main body (101) in a state that elastic tension occurs to the seat back main body (101),
comprising;
a locking part (8) to be locked to a fixture (5) formed on said seat back main body (101); and
a holding part (7) including;
a groove (9) formed integrally with the locking part (8), and in order to hold a protrusion (3) formed protrudingly on a part of said fastening elastic string (104, 105, 106, 107) so as to protrude in a thickness direction thereof, to insert the fastening elastic string (104, 105, 106, 107) in a state of being under elastic tension thereof; and
stopper (11b, 11d, 11e, 11f, 11g) formed on a part of said groove (9) to set said protrusion (3) by elasticity in a shrinking direction of the fastening elastic string (104, 105, 106, 107) in a state of tension to said fastening elastic string (104, 105, 106, 107) being relaxed.

2. The clip for holding a fastening elastic string (104, 105, 106, 107) as claimed in claim 1, wherein
tapered inner surfaces (12) are formed at least one end of said groove (9) being distanced increasingly to an extending direction of the groove (9), in order to receive the protrusion (3) of said fastening elastic string (104, 105, 106, 107) acting as guide or said stopper (11b, 11d, 11e, 11f, 11g) for the protrusion (3) of the fastening elastic string (104, 105, 106, 107).

3. The clip for holding a fastening elastic string (104, 105, 106, 107) as claimed in claim 2, wherein
said stopper (11b, 11d, 11e, 11f, 11g) is positioned at back portion of said tapered inner surfaces (12) of the groove (9) so that the protrusion (3) of said fastening elastic string (104, 105, 106, 107) can be guided by said tapered inner surfaces (12) and then set at said stopper (11b, 11d, 11e, 11f, 11g).

4. The clip for holding a fastening elastic string (104, 105, 106, 107) as claimed in claim 1, wherein
the stopper (11b, 11d, 11e, 11f, 11g) of said holding part (7) set said protrusion (3) formed on a middle portion of said fastening elastic string (104, 105, 106, 107) leaving a surplus length portion (4) to end thereof,
and said holding part (7) is provided with constraining section (13a) to constrain the surplus length portion (4) in a state that the protrusion (3) is set at the stopper (11b, 11d, 11e, 11f, 11g) as a portion being held by an operator for pulling operation of the fastening elastic string (104, 105, 106, 107).

5. The clip for holding a fastening elastic string (104, 105, 106, 107) as claimed in claim 1, wherein
said locking part (8) comprises at least one pair of elastically deformable clicks (19) to be inserted to a fixing hole (5) as the fixture formed on said seat back main body (101), and
these clicks (19) are touched to opening edges of said fixing hole (5) so as to go through the opening edges while being elastically deformed to narrow distance therebetween, and then elastically restored as widening the distance, so as that these clicks (19) are locked at the edges of the fixing hole (5).

6. The clip for holding a fastening elastic string (104, 105, 106, 107) as claimed in claim 1, wherein
said locking part (8) comprises two pairs of elastically deformable clicks (19) to be inserted respectively as each pair to the two fixing holes (5) as the fixture formed on said seat back main body (101),
one pair of these clicks (19) being touched to an opening edge of the one fixing hole (5), and the other pair of the clicks (19) being touched to an opening edge of the other fixing hole (5) going through the respective opening edges being elastically deformed as narrowing distances between the respective clicks (19) and then
being elastically restored as widening distance between the respective clicks (19),
so that the pairs of the clicks (19) are locked to the edges of the respective fixing holes (5).

7. The clip for holding the fastening elastic string (104, 105, 106, 107) as claimed in claim 6, wherein
said locking part (8) comprises;
a first and second locking main bodies (15, 16) mounting a bridge (6) between said two fixing holes (5) to be inserted to the respective fixing holes (5); and
pairs of clicks (19) formed respectively on both side surfaces of the first and second locking main bodies (15, 16) to be opposed to each other in an intersecting direction with a direction connecting these two fixing holes (5), and the position of the first and second locking main bodies (15, 16) in the direction connecting said two fixing holes (5) are restricted by said first and second locking main bodies (15, 16) holding said bridge (6) between said two fixing holes (5), meanwhile
the position of the first and second locking main bodies (15, 16) in the intersecting direction with the direction connecting said two fixing holes (5) is fixed by locking the one pair of the clicks (19) formed on both side surfaces of said first locking main body (15) to the opening edge of the one fixing hole, and the other pair of the clicks (19) formed on both side surfaces of the second locking main body (15) to the opening edge of the other fixing hole, so as to prevent pulling out from those two fixing holes (5).
